(19) **Europäisches Patentamt**

**European Patent Office**

**Office européen des brevets**

(11) **EP 1 394 739 A1**

(12) **EUROPEAN PATENT APPLICATION**

(43) Date of publication:
**03.03.2004 Bulletin 2004/10**

(51) Int Cl.7: **G06T 3/00**

(21) Application number: **02018777.9**

(22) Date of filing: **22.08.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **CHRISTER PIHL DATA AB**<br>**41457 Göteborg (SE)** | (72) Inventor: **Pihl, Christer**<br>**414 57 Göteborg (SE)**<br><br>(74) Representative: **Lind, Urban**<br>**Awapatent AB,**<br>**P.O. Box 11394**<br>**404 28 Göteborg (SE)** |

(54) **Mosaicing from microscopic images of a specimen**

(57)    A method for generating a macro image based on a sequence of digital images, each representing a view of a specimen in a microscope, said microscope allowing manual relative movement between the specimen and the microscope. The method comprises selecting a tracker image (step 10) and a current image (step 20) from the flow of images, at least partly overlapping each other, and then automatically determining a geometric relationship (step 30) resulting from the relative movement of the specimen and microscope. The current image is then included in the macro image (step 40), in a position having said geometric relationship to the tracker image.

According to the invention, there is no need of any automated X, Y stage measurement or control since the computer program scans the image and merges them at best optical fit.

*Fig. 2*

**Description**

Field of invention

The present invention relates to a method for generating a macro image based on a sequence of digital images, each representing a view of a specimen in a microscope, the microscope allowing manual relative movement between the specimen and the microscope.

The invention can advantageously be applied in a microscope having a system for generating a magnified view of a specimen, the microscope being arranged to allow manual relative movement between the specimen and the microscope, and an image capturing device, for acquiring a sequence of digital images, each representing a view of the specimen.

Technical background

There are today at least two types of microscopes in the laboratory field. The manual microscope with a mounted digital camera or video camera is a standard equipment in many laboratories. The specimen is displayed on a monitor such as a TV-screen. A problem with this equipment is that the monitor only can display the small part of the specimen that presently is in the field of view of the camera equipment at any given instant. Hence, it is not possible for the user to obtain an overview of the entire specimen.

This problem is solved by the second type of microscope, where an automatic scanning of the specimen is performed by computer controlled movement of the camera equipment and/or the specimen. Such a microscope system is described in US 6,272,235. The movement of the specimen and/or the camera equipment is synchronized using position sensors so that the separate pictures may be joined together in correct positions. Although effective in some situations, a microscope of this type is very expensive and not affordable for a smaller laboratory.

Attempts to electronically merge smaller images into a larger image are known, for example in US 6,331,860, describing a scanner capable of stitching together several scanned images into one. However, the process requires a user to identify features upon which the stitching is to be performed. Such a system is not useful in a microscope system.

Also, other methods are known in the art, where images are acquired and then manually merged together, with or without the help of computer systems. A serious drawback with all such methods is the amount of time required to merge the images. Even though the end result may be adequate, a microscope user typically does not have time to perform such a method. On the contrary, an automatic process, performed in real time, is required.

Summary of the invention

An object of the present invention is to overcome the above stated problems, and to thereby provide a microscope with satisfying scanning features at lower cost.

A further object is to enable display of a portion of the specimen that is lager than the actual field of view, limited by both the microscope at a specific magnification, and the image size of the mounted camera.

According to a first aspect of the present invention, these and other objects are accomplished by a method of the type mentioned by way of introduction, further comprising selecting a tracker image from the flow of images, said tracker image being comprised in the macro image, selecting a current image from the flow of images, said current image at least partly overlapping the tracker image, automatically determining a geometric relationship between said tracker image and said current image, said geometric relationship resulting from the relative movement of the specimen and microscope between the acquiring of the tracker image and the current image, respectively, and including the current image in the macro image, in a position having said geometric relationship to the tracker image.

Through this method it is possible to generate a reconstructed, seamless macro image of the studied object from a sequence of images representing consecutive fields of view of the microscope. The program receives the sequence of images and for each image determines the relative position compared to a reference image. This relative position is used to merge each image into the macro image. To determine the relative position, a current image is compared to a stored reference image. As the system in this way automatically tracks the relative movement, the specimen and/or microscope can be moved manually without need of any sophisticated measurement or control. A seamless macro image including the entire area of interest, can thus be composed in real time, at low cost.

Computer controlled scanning microscopes with movement measurement are expensive. A microscope with a mounted camera connected to a computer is a common set of equipment at laboratories and companies. The present invention is a solution to turn this type of equipment into a scanning microscope, simply by adding a computer software. The computer software acquires the sequence of digital images, representing the different views of the microscope, it tracks the image movements, reconstruct a macro image, which can be saved and viewed later, and continuously displays a seamless image of the specimen. Thus, there is no need of any automated X, Y stage measurement or control.

When a computer controlled or computer measured movement is used, a common problem is that the actual specimen is not moved exactly the in same way as the x,y platform measured or controlled resulting in mismatch of the reconstructed image. The method according to the present invention does not have the same problem since it is using the actual image of the specimen.

In the future, digital cameras frame rate will increase. The number of pixels will increase, the intensity and color accuracy will increase, the image frame rate will increase and image quality will be higher. All this leads to higher accuracy in the described method and less accuracy in the computer controlled systems relative to the image quality.

Preferably, the method further comprises determining whether an overlap between the first and second images is smaller then a predetermined area, and in this case selecting the current image as tracker image. Unless the overlap is sufficiently small (i.e., the movement between images is to small) the tracker image is thus maintained, and several consecutive images in the sequence will be compared to the same tracker image. Only when the movement is larger than a predetermined threshold, such as one pixel, the tracker images is replaced by the current image being processed. This improves the tracking.

The geometric relationship can comprise translation, but also rotation, depending on the degrees of freedom of the specimen.

It may also be advantageous to allow for scaling when determining the geometrical relationship. A switch of optical system, such as a change of magnification, will then not be a problem, but be automatically adjusted for by a system working according to the method.

According to a preferred embodiment, the step of determining a geometric relationship between the current image and the tracker image includes defining a current sub-image as a portion of the current image, defining a plurality of tracker sub-mages as portions of the tracker image, said tracker sub-images being uniform in shape and size as said current sub-image, comparing said current sub-image with said plurality of tracker sub-images, using the position and orientation of the best matching tracker sub-image to determine the position and orientation of the current image in relation to the tracker image.

According to this embodiment, the relative movement between two consecutive images is determined in a process that can be described as "moving" a sub-image of the current image over the tracker image until the best matching position is found.

The comparison between sub-images can be performed in several ways, for example by subtracting the two images pixel by pixel and summing the absolute values of these subtractions. Such a process can be implemented to operate in real time, which is a great advantage.

The order in which the current sub-image is compared to the tracker sub-images can further be optimized to increase performance, as can the number of defined tracker sub-images.

The current sub-image is preferably defined by removing a border on all sides of the current image, only leaving the central portion as the current sub-image. The border width is preferably greater than the maximum amount of movement that is possible between acquiring of consecutive images in the image sequence. If the border is less than the amount of movement, the overlap between the current image and the tracker image will be smaller than the current sub-image, which consequently will not be possible to locate in the tracker image.

The shape of the sub-images is preferably rectangular, as this results in a simpler implementation.

According to a further preferred embodiment the method comprises repeatedly displaying the macro image on a display. This has the effect of "painting" a image of the specimen on the screen as the specimen and microscope are moved in relation to each other. The image is preferably updated each time an image is acquired.

According to a second aspect of the invention, the above objects are achieved by an apparatus of the kind mentioned by way of introduction, comprising image processing means for performing the steps of the method. The apparatus can also include a display arranged to display the macro image.

According to a third aspect of the invention, the above objects are achieved by a microscope of the kind mentioned by way of introduction, further comprising an apparatus according to the invention.

In such a microscope, the image capturing device is preferably arranged after the optical system of the microscope, thereby acquiring magnified views of the specimen.

Brief description of the drawings

These and other aspects of the invention will be apparent from the preferred embodiments more clearly described with reference to the appended drawings.

Fig 1 is a block diagram of a preferred embodiment of a microscopy system according to the present inventions.

Fig 2 is a flowchart of an embodiment of the method according to the invention.

Fig 3 is a more detailed flowchart of one step in the flowchart in fig 1.

Fig 4 shows a movement of a view of a microscope in relation to a specimen.

Fig 5 shows a current image and a current sub-image.

Fig 6 shows a tracker image with a selected tracker sub-image.

Fig 7 shows a tracker image with a selected tracker sub-image corresponding to current sub-image in fig 5.

Detailed description of preferred embodiments

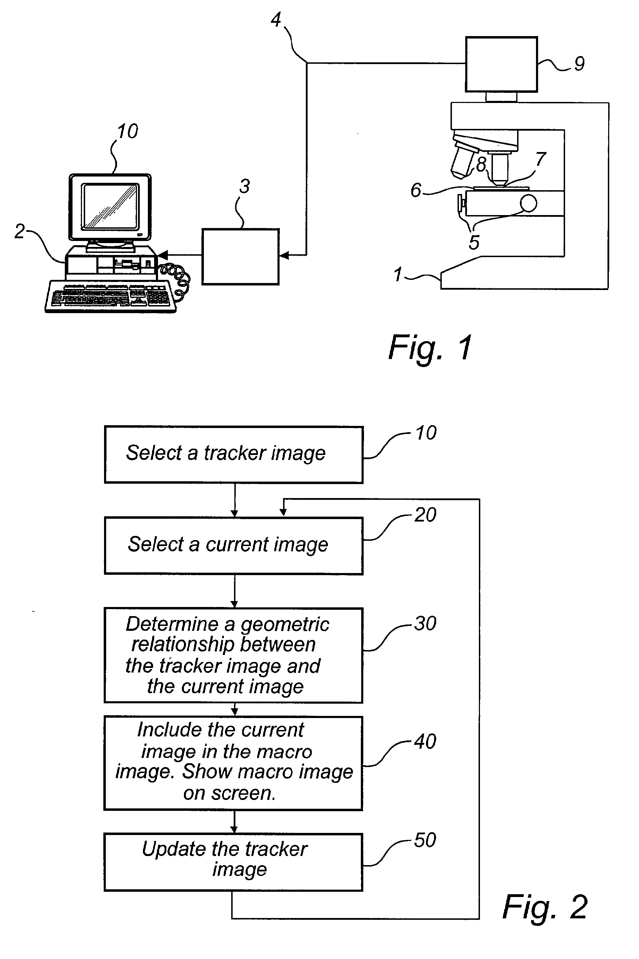

The following description of a preferred embodiment will relate to a microscope system as shown in fig 1. The microscope system may be an optical microscope, an electron microscope or any other type of microscope. This system comprises a microscope 1 connected to a computer 2 via an image acquisition unit 3 and an video cable 4. The microscope 1 has manual x,y-controls 5 which are connected to a movable platform 6 on which a specimen 7 is placed. The specimen 7 is the object that is to be examined. With the x,y-controls 5 the specimen 7 is moved along x-axis and y-axis in a two-dimensional coordinate system. As the specimen 7 is being moved, the video camera 9 captures images of the microscope view 11 through an objective 8, and thus it generates a continuous flow of consecutive images having a predetermined magnification, optical resolution and pixel resolution. The microscope 1 may have many objectives with different magnifications or it may have one objective with a variable magnification. The video camera 9 sends a video signal through the video cable 4 to the image acquisition unit 3. The image acquisition unit 3 transforms the video signal to a flow of digital images which can be further processed by the computer. The video camera may be a digital video camera which directly generates digital images, or the images can be digitized by a video card. The computer 2 is arranged to perform a method according to the invention as described in the following detailed description. This results in a macro image of the specimen 7 is displayed on a screen 10 which is connected to the computer 2.

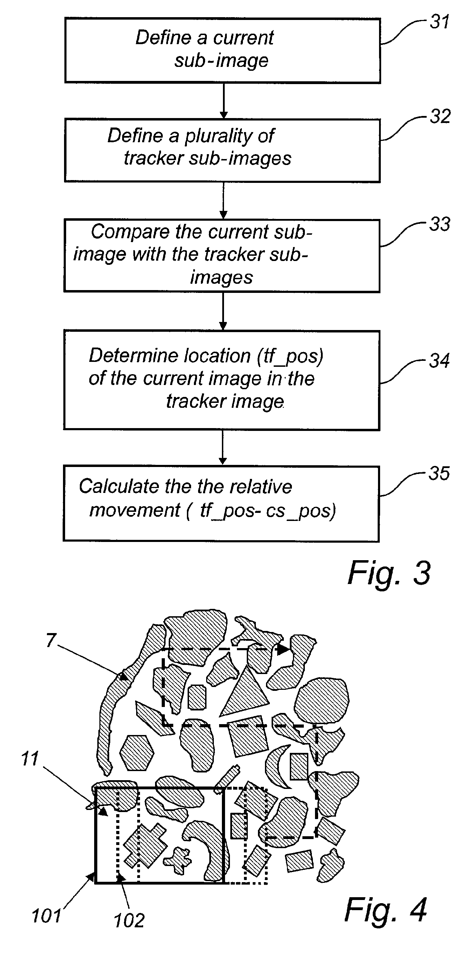

Fig 4 shows how the content of the microscope view 11 is captured at three consecutive times during movement of the specimen 7. The two first images have been given reference numerals 101 and 102, and will be further discussed below.

The method performed by the computer 2 will now be described with reference to fig 2. In step 10, a first tracker image 101 is selected from the flow of images acquired by the video camera. In step 20, a current image 102 is then selected from the subsequent images in the flow of images. The tracker image 101 and the current image 102 are stored in the computer 2.

In step 30, a geometric relationship between the tracker image 101 and the current image 102 is determined. An example of an embodiment of this step is described in more detail in the steps 31 to 34 in fig 3.

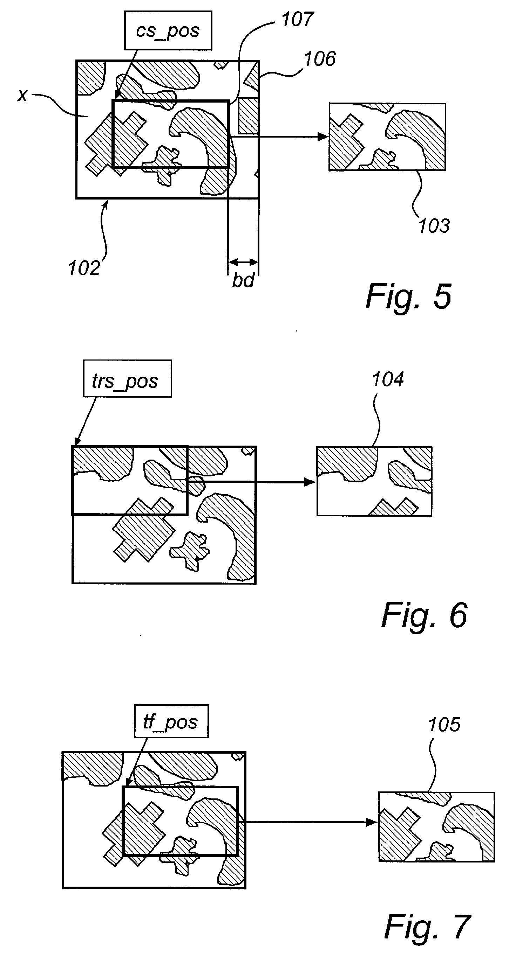

To determine how much the specimen 7 has been moved since the tracker image 101 was acquired, a sub-image 103 of the current image 102, i.e., a part of the current image 102, is defined according to step 31 in fig 3. This sub-image is referred to as the current sub-image 103. Preferably, the sub-image 103 is defined by cutting away a border with width bd on all sides of the current image 102, as shown in fig 5. The distance bd between the current image edge 106 and the current sub-image edge 107 has to be at least the maximum number of pixels the specimen 7 is moved between each image frame captured by the video camera 9. This is valid for the left, right, upper and lower border. The value cs_pos indicates the position of the current sub-image 103 in the current image 102.

In step 32, a set of tracker sub-images (104 in fig 6) with the same size as the current sub-image 103 is created from the tracker image 101. The set of images can be defined by a set of image positions, trs_pos, in the tracker image 101. The number and selection of tracker positions trs_pos can be decided in the following ways:

a) All possible positions in the tracker image 101, in which the sub-image 104 fits inside the tracker image.

b) Only the expected positions, in which the sub-image 104 fits inside the tracker image. This can be suitable e.g., if the specimen 7 only is assumed to be moved only along the x or y axis (common method in microscopy), or any other expected movement path. By this method, the number n of calculations can be reduced from complexity $O(n^2)$ in method a to $O(n)$.

In step 33, the current sub-image 103 is compared with the tracker sub-images 104 by calculating an image difference value (image_diff) according to a formula below. The image difference is a calculated value used to determine how much two images differ.

If the two images are identical the image difference value image_diff is zero. If the two images are different, the image difference value image_diff is larger than zero, and the more the images differ in intensity, color and shapes, the image difference value increases.

An image difference value image_diff for the current sub-image 103 and each tracker sub-image 104 is calculated as the sum of the absolute value of the difference for each color intensity in a set of pixels according to the formula below.

image_diff = $\Sigma|pa(x',y')-pb(x',y')|$ for a set of x,y points using pixel difference calculation, where

pa(x',y') = pixel intensity in image a (the current sub-image 103) for the pixel at coordinate x',y', and

pb(x',y') = pixel intensity in image b (the tracker sub-image 104) for the pixel at coordinate x',y'.

Pixel difference is a calculated value which represents how much two pixels differ. For an RGB pixel, where R is the pixel intensity for the red color, G is for green and B is for blue, each color being subtracted individually. The pixel difference between two RGB pixels is calculated as the sum of the absolute values of each colors intensity. The result is the sum of R', G' and B', where R' = abs $(R_1-R_2)$, G' = abs $(G_1-G_2)$ and B' = abs $(B_1-B_2)$. For grayscale images the pixel difference is the absolute difference of the intensity value. The absolute value is defined as if the value is positive, the same value is used, if the value is negative, then the sign is changed to positive.

Even though two images are identical, the image difference value image_diff may be larger zero. This is a result of optical, camera and digitizing distortions, but the best match will still be when the sub-images are of the same view of the specimen 7.

The amount of computer power and memory used in step 33 can be reduced by calculating an image difference value image_diff without actually creating the set of complete tracker sub-images. Instead of creating the set of complete tracker sub-images, only a set of pixels within the tracker image is selected for comparison with the current sub-image. The image difference value image_diff is then calculated according to the aforementioned image difference formula. Image b is thus reduced from a complete image (a tracker sub-image), to a smaller set of pixels. Consequently the calculation is performed more rapidly. Still, a set of tracker positions $trs\_pos_i$ are selected according to abovementioned point a) and b).

The selection of the set of x,y points (pixels) to use for image difference calculation can be performed in different ways:

a. All points (pixels) may be selected. This case gives the best confidence of the quality value, but has complexity $O(n^2)$, which means that the calculation is slow for large images. n is the number of pixels in the image, and then the complexity is number of calculations needed.

b. A constant number of points distributed at equal distances relative to the image size may be selected, for example at 10 points steps horizontal and vertical.

c. A fixed number of points representing the points with highest or lowest pixel values. Pixel value is represented by the combination of red, green and blue intensity values for a color image, or by a single value for intensity for a grayscale image. The intensity for each color has a range from minimum intensity to maximum intensity.

d. A fixed number of points representing the points with the highest or lowest pixel values after x-y image filtration.

e. Any other selection.

The total number of points (pixels) used may be based on the calculation capacity of the computer 2. In case a, the number of points will be too large for calculation when the resolution of the video camera 9 is high. The method works even with as few as 5% of the total number of pixels within the current sub-image, resulting in that the computer 3 can calculate the image difference value image_diff in less time than the video image frames are generated, even for high frame rates.

In step 34 a variable tf_pos (see fig 7) is determined. tf_pos is the position of a tracker sub-image 105 that results in the lowest image difference value image_diff, compared to the current sub-image 103. Thus, tf_pos is the location of the current sub-image 103 in the tracker image 101.

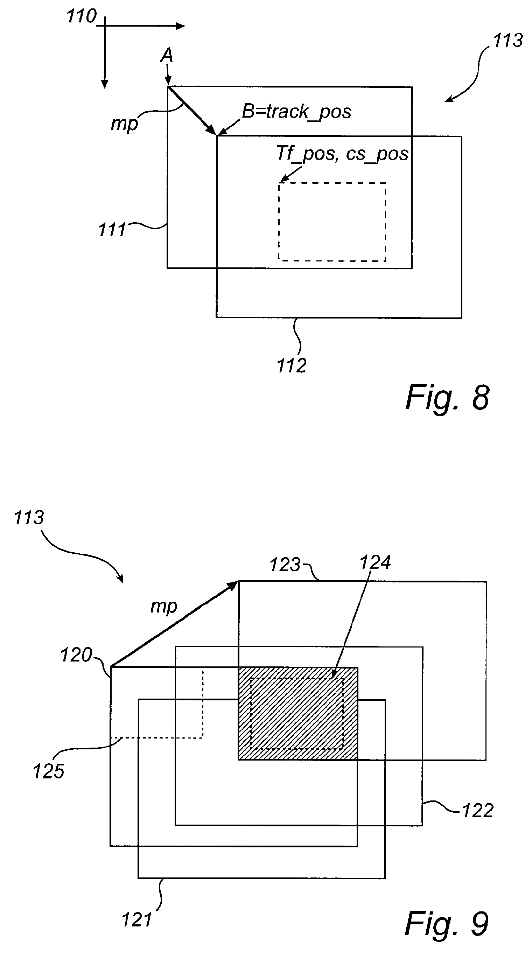

In step 35 the relative movement mp between the tracker image 101 and the current image 102 is calculated. With reference to fig 8, the calculation of mp is explained in more detail.

A two-dimensional coordinate system 110 is defined when the first tracker image is stored in the computer 2. The orientation of the two axis in the coordinate system 110 preferably correspond to the directions in which the x,y-controls 5 are arranged to move the specimen 7. A current image 112 is matched with a tracker image 111 according to steps 31 to 34 above, and thus the points tf_pos and cs_pos correspond. One corner of the tracker image 111 is located at point A in the coordinate system 110 and one corner of the current image 111 is located at point B in the same coordinate system. The point tf_pos is a relative position related to point A and the point cf_pos is a relative position related to point B.

Starting from point A, a relationship can be formulated:

$$mp + cs\_pos = tf\_pos,$$

resulting in the equation:

$$mp = tf\_pos - cs\_pos.$$

The mp value is preferably calculated between each frame recorded by the video camera 9.

The value track_pos is the position of the current image 112 in the coordinate system 110 (for example B in fig 8), calculated by adding mp to the point A of the tracker image 111. The current image 112 and its corresponding track_pos is inserted in a list for further processing by the computer 2. Alternatively, the list comprises each mp value, as this provides the equivalent information.

Returning now to fig 2, in step 40 the stored images and the track_pos list are used to reconstruct the macro image by including the current image 102, 112 in the macro image at a corresponding position track_pos. The resulting image, referred to as a macro image, is displayed on the computer screen 10.

When the current image has been included in the macro image in step 40, the tracker image 101, 111 may be updated in step 50. However, the same tracker image is used for any number of frames passed, until the movement of the specimen 7 in relation to the microscope 1 has been measured to be larger than a predefined number of pixels. This is determined in step 45. The number of pixels has to be larger than 0 pixels and less than the maximum allowed movement distance between two frames, that is the maximum speed of the movement. However, a video camera usually takes 25 frames a second resulting in a higher movement speed than the user uses during normal operation when studying a specimen. The threshold for replacing the tracker image (movement greater than 0 pixels) is needed because if the tracker image were to be updated for each new frame when no movement has been measured, the specimen could be moved slowly, less than a pixel between each frame, and the tracking image would be updated without registering the movement. This would result in bad tracking of the movement.

The steps 20-50 are repeated continuously as the user scans the specimen 7 by moving it. The resulting macro image, showed on the screen 10, can be saved as a file on a hard disk or a diskette. It can also be printed on paper or sent to another computer and displayed at real-time by a computer network/internet.

The calculated relative movement mp is a position integer value (a discrete number of pixels). The actual movement of the specimen 7 may therefore not be exactly the same as the calculated movement mp, resulting in an accumulated aberration. In certain circumstances this aberration can be reduced. Fig 9 shows four stored images 120, 121, 122 and 123, whose corresponding positions are stored in the track_pos list. As the positions are based on the relative movement mp, an aberration may have been accumulated.

In order to eliminate this problem, the steps 31-35 may be implemented on the intersection 124 between image 120 and 123. The intersection contents according to image 120 is selected as the current sub-image (step 31), while tracker sub-images 125 of equal size are defined from the image 123 (step 32). These sub-images 124, 125 may now be processed as in steps 33 to 35, and an adjusted relative position mp and track_pos for image 123 with relation to image 120 is generated. The intermediate track_pos values (for images 121 and 122) can now be interpolated.

Adjustments of the track_pos variables can be done in real-time or as a user trigged routine at any time, for example when a desired macro image is displayed on the computer screen 10.

A microscope user may change magnification levels or objectives 8 during the examination of the specimen 7. According to an embodiment of the invention, such a magnification increase or decrease may be automatically detected. Often a microscope 1 is provided with a limited number of magnification objectives 8 with predefined magnification levels. Typically two to five magnification levels are available. While the limited number of magnification levels demands less computer power, the following method is also applicable to microscopes with continuous magnification levels.

A magnification tracker is basically the same method as shown in fig. 2 and fig. 3, and may be active all the time or activated when the relative movement mp has not changed for a predefined amount of time. The magnification tracker may also be activated when the movement tracking does not find any tracker sub-images that corresponds to the current sub-image, in step 33. A high image difference value may be due to a magnification level change.

As a microscope 1 usually does not locate a new objective 8 at exactly the same position as the previous objective, and in order to stitch the magnified view of the specimen at correct location in the macro image, the position of the new magnified view in the tracker image and the magnification level change (increase or decrease) has to be determined.

In step 20 the magnified view of the specimen 7 is selected as the current image. When the magnification is increased, the current image corresponds to a smaller part of the tracker image. And when the magnification is decreased the tracker image corresponds to a smaller part of the current image.

In order to determine the magnification level change, from a known magnification level, the steps 31 to 33 have to be executed as a loop for every alternative magnification level. That is, for a microscope with five magnification levels (objectives) the loop has to be run through five times at maximum.

An example may be clarifying. A microscope 1 is provided with three magnification levels; 100, 500, and 1000 times. The magnification levels has been changed from 500 times magnification. Consequently two tests have to be performed.

In steps 31 and 32, a current sub-image and tracker sub-images are defined in two different manners. Firstly, to test if the magnification level has increased, the current image is down-scaled as much as the magnification may increased (here 2 times, from 500 to 1000). The image scaling operations are well known in the art. The down-scaled current image is defined as the current sub-image. In step 32 a plurality of tracker sub-images, with the same dimensions as the current sub-image, are defined. Step 33 is executed as described above. Secondly, to test if the magnification level has decreased, the tracker image is down-scaled as much as the magnification may have decreased (here 5 times, from 500 to 100). In step 31 the down-scaled tracker image is used as current sub-image, and the tracker sub-images are defined from the current image, that is the magnified view of the specimen. Step 33 is executed as described above. In the case of continuous magnification microscope, a larger number of magnification levels may be used.

To reduce the number of calculations in step 33, the search area, i.e. the tracker sub-images, may be concentrated to the center of the tracker image (increased magnification) or current image (decreased magnification), since images with different magnification levels are expected to be concentric, if the specimen is not moved during the magnification operation. The sub-image comparison which results in the lowest image difference value corresponds to actual magnification level change and image location.

A location may now be calculated in steps 34 and 35 as described above. Since the microscope may position each objective individually, the determined positions for each magnification level may be stored for later use, to reduce the search area in step 33.

The image of the magnified view of the specimen and its corresponding track_pos and magnification level are inserted in a list for further processing by the computer 2.

In step 40 a macro image is developed from the magnified images and the information in the track_pos list, and displayed on the computer screen 10. The images with higher magnification level may be "painted" over the parts of the macro image with lower magnification levels. Thus, the method creates a macro image with low image resolution at the areas where low magnification has been used, and high image resolution where high magnification has been used. The macro image may also be zoomed on the computer screen 10 in order to, for example examine smaller details. The areas with higher magnification may also be marked or highlighted in some way.

## Claims

1. A method for generating a macro image based on a sequence of digital images, each representing a view of a specimen (7) in a microscope (1), said microscope (1) allowing manual relative movement between the specimen (7) and the microscope (1), said method comprising:

   selecting a tracker image (step 10) from the flow of images, said tracker image being comprised in the macro image;
   selecting a current image (step 20) from the flow of images, said current image at least partly overlapping the tracker image;
   automatically determining a geometric relationship (30) between said tracker image and said current image, said geometric relationship resulting from the relative movement of the specimen (7) and microscope (1) between the acquiring of the tracker image and the current image, respectively;
   including the current image in the macro image (step 40), in a position having said geometric relationship to the tracker image.

2. Method according to claim 1, further comprising:

   determining whether an overlap between the first and second images is smaller then a predetermined area, and in this case selecting the current image as tracker image (step 50).

3. Method according to claim 1, wherein said geometric relationship comprises translation.

4. Method according to claim 1, wherein said geometric relationship comprises rotation.

5. Method according to claim 1, wherein said geometric relationship comprises scaling.

6. Method according to any of the preceding claims, wherein the step of determining a geometric relationship (step 30) between the current image and the tracker image further comprises:

   defining a current sub-image (step 31) as a portion of the current image,
   defining a plurality of tracker sub-mages (step 32) as portions of the tracker image, said tracker sub-images being uniform in shape and size as said current sub-image,
   comparing said current sub-image (step 33) with said plurality of tracker sub-images,
   using the position and orientation of the best matching tracker sub-image to determine the position and orientation of the current image (step 34) in relation to the tracker image.

7. Method according to claim 6, wherein the current sub-image is defined by removing a border on all sides of the current image.

8. Method according to claim 7, wherein the border width is greater than a maximum amount of movement possible between acquiring of consecutive images in the image sequence.

9. Method according to claim 6 - 8, wherein the shape of the sub-images is essentially rectangular.

10. Method according to any of the preceding claims, further comprising repeatedly displaying the macro image on a display (10).

11. An apparatus for generating a macro image based on a sequence of digital images, each representing a view of a specimen (7) in a microscope (1), said microscope (1) allowing manual relative movement between the specimen (7) and the microscope (1), said apparatus being **characterized by**:

   image processing means (2) for selecting a tracker image from the flow of images, said tracker image being comprised in the macro image,
   image processing means (2) for selecting a current image from the flow of images, said current image at least partly overlapping the tracker image,
image processing means (2) for automatically determining a geometric relationship between said tracker image and said current image, and image processing means (2) for including the current image in the macro image, in a position having said geometric relationship to the tracker image.

12. An apparatus according to claim 11, further comprising image processing means (2) for determining whether an overlap between the first and second images is smaller then a predetermined area, and in this case selecting the current image as tracker image.

13. Apparatus according to claim 11 or 12, further comprising a display (10) arranged to display the macro image.

14. A microscope system comprising:

   means (8) for generating a magnified view of a specimen (7),
   said microscope (1) being arranged to allow manual relative movement between the specimen (7) and the microscope (1), and
   an image capturing device (9), for acquiring a sequence of digital images, each representing a view of the specimen (7),

   **characterized by** an apparatus according to claims 11 - 13.

15. A microscope (1) according to claim 14, wherein said image capturing device (9) is arranged after the means (8) for generating a magnified view of the specimen.

16. A computer program product comprising computer program code portions for performing the steps of the method according to claims 1 - 10 when run on a computer.

17. A computer program product according to claim 16, stored on a computer readable medium.

*4*

*9*

*10*

*8*

*7*

*6*

*3*

*2*

*5*

*1*

## Fig. 1

Select a tracker image — *10*

Select a current image — *20*

Determine a geometric relationship between the tracker image and the current image — *30*

Include the current image in the macro image. Show macro image on screen. — *40*

Update the tracker image — *50*

## Fig. 2

```
┌─────────────────────────────┐
│      Define a current       │──── 31
│         sub-image           │
└─────────────────────────────┘
              │
              ▼
┌─────────────────────────────┐
│      Define a plurality of  │──── 32
│      tracker sub-images     │
└─────────────────────────────┘
              │
              ▼
┌─────────────────────────────┐
│     Compare the current sub-│──── 33
│     image with the tracker sub-│
│            images           │
└─────────────────────────────┘
              │
              ▼
┌─────────────────────────────┐
│  Determine location (tf_pos)│──── 34
│  of the current image in the│
│         tracker image       │
└─────────────────────────────┘
              │
              ▼
┌─────────────────────────────┐
│   Calculate the the relative│──── 35
│  movement ( tf_pos- cs_pos) │
└─────────────────────────────┘
```

*Fig. 3*

*Fig. 4*

*Fig. 5*

*Fig. 6*

*Fig. 7*

A

B=track_pos

Tf_pos, cs_pos

mp

110

113

111

112

Fig. 8

113

123    124

mp

120

125

121    122

Fig. 9

**European Patent Office**

## EUROPEAN SEARCH REPORT

Application Number

EP 02 01 8777

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 008 956 A (SYNOPTICS LIMITED) 14 June 2000 (2000-06-14) | 1,3,6, 9-11, 13-17 | G06T3/00 |
| Y | * abstract * <br> * page 2, line 3 - line 10 * <br> * page 2, line 26 - page 3, line 3 * <br> * page 3, line 20 - line 27 * <br> * page 5, line 46 * <br> * page 6, line 19 - line 20 * <br> * page 7, line 11 - line 12 * <br> * page 7, line 22 - line 35 * <br> * page 7, line 44 - line 49 * <br> * page 8, line 1 - page 9, line 48 * <br> * page 9, line 58 - page 10, line 3 * <br> * claims 1-3,6-10 * <br> * figure 1 * <br> --- | 2,4,5,12 | |
| Y | MANN S ET AL: "VIDEO ORBITS OF THE PROJECTIVE GROUP: A SIMPLE APPROACH TO FEATURELESS ESTIMATION OF PARAMETERS" IEEE TRANSACTIONS ON IMAGE PROCESSING, IEEE INC. NEW YORK, US, vol. 6, no. 9, 1 September 1997 (1997-09-01), pages 1281-1295, XP000701467 ISSN: 1057-7149 * abstract * * table I * * section "I. Introduction" * * section "II. A. Coordinate Transformations" * * section "V. Performance and Applications" (pp. 1291 - 1294) * --- | 2,4,5,12 | TECHNICAL FIELDS SEARCHED (Int.Cl.7) <br><br> G06T |
| | -/-- | | |

The present search report has been drawn up for all claims

| Place of search | Date of completion of the search | Examiner |
|---|---|---|
| MUNICH | 13 December 2002 | Eckert, L |

EPO FORM 1503 03.82 (P04C01)

**European Patent Office**

## EUROPEAN SEARCH REPORT

Application Number

EP 02 01 8777

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 313 452 B1 (DIXON DOUGLAS FREMONT ET AL) 6 November 2001 (2001-11-06)<br>* abstract *<br>* figure 4 *<br>* column 1, line 17 - line 18 *<br>* column 2, line 5 - line 26 *<br>* column 2, line 58 - line 67 *<br>* column 3, line 11 - line 22 *<br>* column 3, line 38 - line 42 *<br>* column 4, line 37 - line 48 *<br>* column 4, line 55 - line 65 *<br>* column 5, line 47 - line 52 *<br>* column 8, line 5 - line 10 *<br>* claims 1-3,5,6,9,14,18 *<br>----- | 1,3,10, 11,13-16 | |
| | | | **TECHNICAL FIELDS SEARCHED** (Int.Cl.7) |

The present search report has been drawn up for all claims

| Place of search | Date of completion of the search | Examiner |
|---|---|---|
| MUNICH | 13 December 2002 | Eckert, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 01 8777

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2002

| Patent document cited in search report | | Publication date | Patent family member(s) | | Publication date |
|---|---|---|---|---|---|
| EP 1008956 | A | 14-06-2000 | EP | 1008956 A1 | 14-06-2000 |
| | | | JP | 2000182034 A | 30-06-2000 |
| US 6313452 | B1 | 06-11-2001 | NONE | | |

EPO FORM P0459

For more details about this annex : see Official Journal of the European Patent Office, No. 12/82